(19) Europäisches Patentamt / European Patent Office / Office européen des brevets

(11) **EP 3 878 534 A1**

(12) # EUROPEAN PATENT APPLICATION

(43) Date of publication:
**15.09.2021 Bulletin 2021/37**

(51) Int Cl.:
**B01D 11/02** (2006.01)

(21) Application number: **20162786.6**

(22) Date of filing: **12.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Wageningen Universiteit**
**6708 PB Wageningen (NL)**

(72) Inventors:
• LO, Calvin
  **6708 PZ Wageningen (NL)**
• EPPINK, Michel Hendrikus Maria
  **5345 GJ Oss (NL)**
• VAN DEN BERG, Corjan
  **3583 RL Utrecht (NL)**
• WIJFFELS, René Hubertus
  **6703 AR Wageningen (NL)**

(74) Representative: **V.O.**
**P.O. Box 87930**
**2508 DH Den Haag (NL)**

(54) **EXTRACTION AND BACK-EXTRACTION OF HYDROPHOBIC COMPOUNDS USING DEEP EUTECTIC SOLVENT WITH TUNEABLE HYDROPHOBICITY**

(57) The invention relates to an amphiphilic, deep eutectic solvent (DES), comprising a DES hydrophilic and a DES hydrophobic compound. The invention further relates to methods for extracting a hydrophobic compound such as a lipid, a pigment such as a carotenoid, and a terpenoid, comprising providing a source of said hydrophobic compound, and extracting said source with the amphiphilic, deep eutectic solvent according to the invention, and to the use of a DES according to the invention for extracting a hydrophobic compound such as a lipid, a pigment such as a carotenoid, and a terpenoid, from a source of said hydrophobic compound.

EP 3 878 534 A1

**Description**

FIELD

The invention relates to deep eutectic solvents (DES) with tuneable hydrophobicity. These DES can be used for extraction of high value compounds from organisms such as algae, yeast, and bacteria, followed by back extraction of these compounds by adjusting the hydrophobicity of the DES.

INTRODUCTION

Typical lipid extraction methods often involve flammable, toxic, fossil-based organic solvents, like chloroform, methanol and hexane (Bligh and Dyer, 1959. Can J Biochem Physiol 37: 911-917; Bockisch, 1998. Fats and Oils Handbook. Elsevier, Hamburg; Folch et al., 1957. J Biol Chem 22: 497-509). Furthermore, solvent evaporation for the lipid back-extraction requires a substantial amount of energy. For example, in the case of soybean oil extraction, ca. 50 - 64% of all consumed steam is required to remove hexane from the oil product (Köseoglu and Engelgau, 1990. JAOCS 67: 239-249). Therefore, to make the process more sustainable and more economical, there is a need for new solvent technologies for lipid extraction.

Novel types of solvent classes, such as ionic liquids and deep eutectic solvents (DESs), have been considered as alternative green solvents (Chua and Schenk, 2017. Bioresour Technol 244: 1416-1424; Kumar et al., 2017. Algal Res 21: 138-147; Lu et al., 2016. Bioresour Technol 218: 123-128; Ventura et al., 2017. Chem Rev 117: 6984-7052). While an ionic liquid is a salt that is liquid at room temperature, a DES is a eutectic mixture of Lewis or Bronsted acids and bases (Smith et al., 2014. Chem Rev 114: 11060-11082). In literature, these acids and bases are also termed as hydrogen bond donors and acceptors. Both ionic liquids and DESs exhibit low volatility, high thermal stability, good solvation capability, and tuneable physicochemical properties (Abbott et al., 2003. Chem Commun 70-71; Ventura et al., 2017. Chem Rev 117: 6984-7052). Unlike ionic liquids which are often considered expensive and complex to synthesise, DESs can be readily made from various compounds, including bio-derived and bio-degradable materials

(Abbott et al., 2004. J Am Chem Soc 126: 9142-9147; Choi et al., 2011. Plant Physiol 156: 1701-1705; Francisco et al., 2013. Fluid Phase Equilib 340: 77-84; Martins et al., 2018. ACS Sustain Chem Eng 6: 8836-8846). This advantage makes DES to be cheaper and potentially more environmentally friendly than ionic liquids. However, since ionic liquids and DESs are not volatile, the lipid back-extraction is not possible by solvent evaporation. Therefore, new back-extraction strategies need to be developed. In this study, we focused on deep eutectic solvents back-extraction.

Since lipids dissolve well in hydrophobic solvents and poorly in hydrophilic solvents, a change in hydrophobicity may facilitate lipid back-extraction in DES system. Sed and co-workers (Sed et al., 2018. RSC Adv 8: 37092-37097) developed a DES system with switchable hydrophilicity, using a fatty acid-based hydrophobic DES and a dilute amine solution. When mixed, the whole system turned hydrophilic. Afterwards, the DES was switched back to its hydrophobic form by acidifying the system or bubbling in $CO_2$ gas (Sed et al., 2018. RSC Adv 8: 37092-37097).

However, back-extraction of the lipids from a DES has remained difficult because of the low vapour pressure of DES and the solute. There is a need for a new method of back-extraction of a hydrophobic compound such as a lipid, a pigment such as a carotenoid, and a terpenoid from after extraction of the hydrophobic compound from a source.

BRIEF DESCRIPTION OF THE INVENTION

Since DESs are mixtures, the property of DES is heavily influenced by the starting compounds and their composition. By combining hydrophobic and hydrophilic compounds, it was hypothesised that DES with a tuneable hydrophobicity can be made by adjusting the dominant compound in the mixture.

To create such amphiphilic DES, several compounds with various degree of hydrophobicity were screened. Carboxylic acids with various chain lengths (C1-C10) were used as Bronsted acids. The Bronsted bases (hydrogen bond acceptors) were based on previously reported hydrophobic DESs, such as DL-menthol, tetrabutylammonium bromide (TBAB) and Aliquat® 336 (methyltrioctylammonium chloride) (Florindo et al., 2017. Fluid Phase Equilib 448: 135-142; Ribeiro et al., 2015. ACS Sustain Chem Eng 3: 2469-2477; Van Osch et al., 2015. Green Chem 17: 4518-4521). Moreover, also imidazole was used as a hydrogen bond acceptor due to its amphiphilic nature (log Poet = -0.08). The screening of the possible binary mixtures was based on the combined log P values of the compounds.

The invention therefore provides an amphiphilic, deep eutectic solvent (DES), comprising a DES hydrophilic and a DES hydrophobic compound, wherein said deep eutectic solvent is characterized by ionic interactions, hydrogen bonding and/or van der Waals forces between said DES hydrophilic and DES hydrophobic compounds. Said DES hydrophilic compound and DES hydrophobic compound are preferably present in a molar ratio between 10:1 and 1:10, preferably between 5:1 and 1:5, more preferably between 1:1 and 1:3.

The DES hydrophilic compound in a preferred amphiphilic, deep eutectic solvent of the invention is a hydrophilic acid selected from short-chain (C1-C8) carboxylic acids, aromatic carboxylic acid such as phenylacetic acid, and short-chain quaternary ammonium salts such as tetrabutylammonium bromide and tetraalkylammonium salt.

The DES hydrophobic compound in a preferred amphiphilic, deep eutectic solvent of the invention is a hydrophobic base selected from monoterpenoids with a hydroxyl group such as menthol or thymol, and heteroaromatics such as pyrazole.

In a preferred amphiphilic, deep eutectic solvent of the invention, the DES hydrophilic compound is tetrabutylammonium bromide and the DES hydrophobic compound is DL-menthol, preferably present in a molar ratio between 1:2 and 1:4.

The invention further provides an amphiphilic, deep eutectic solvent of the invention, wherein the DES hydrophilic compound is a hydrophilic base selected from heteroaromatics such as imidazole-like compounds and tertiary amines such as lidocaine and trimethylamine-like compounds. In such amphiphilic, deep eutectic solvent, the DES hydrophobic compound preferably is a hydrophobic acid selected from medium-chain (C6-C12) fatty acids.

The invention further provides an amphiphilic, deep eutectic solvent of the invention, wherein the DES hydrophilic compound is imidazole and the DES hydrophobic compound is a C6-C8 carboxylic acid such as hexanoic acid or octanoic acid, or wherein the DES hydrophobic compound is DL-menthol and the DES hydrophilic compound is acetic acid. Said DES hydrophilic compound and DES hydrophobic compound preferably present in a molar ratio between 2:1 and 1:5, preferably between 1:1 and 1:3.

The invention further provides a method for extracting a hydrophobic compound such as a lipid, a pigment such as a carotenoid, and a terpenoid, comprising providing a source of said hydrophobic compound, and extracting said source with the amphiphilic, deep eutectic solvent according to the invention. Said method preferably further comprises back-extracting the hydrophobic compound from the amphiphilic, deep eutectic solvent by addition of the DES hydrophilic compound.

A preferred method of the invention further comprises extracting one or more hydrophilic compounds from the amphiphilic, deep eutectic solvent by addition of the DES hydrophilic compound.

Said source of the hydrophobic compound preferably is a biological source such as plant or algal material.

In a most preferred method of the invention, the DES hydrophilic compound is imidazole and the DES hydrophobic compound is hexanoic acid.

The invention further provides an use of an amphiphilic, deep eutectic solvent (DES), comprising a DES hydrophilic and a DES hydrophobic compound, wherein said deep eutectic solvent is characterized by hydrogen bonds between said DES hydrophilic and DES hydrophobic compounds, for extracting a hydrophobic compound such as a lipid, a pigment such as a carotenoid, and a terpenoid, from a source of said hydrophobic compound.

The invention further provides an use of an amphiphilic, deep eutectic solvent (DES), comprising a DES hydrophilic and a DES hydrophobic compound, wherein said deep eutectic solvent is characterized by hydrogen bonds between said DES hydrophilic and DES hydrophobic compounds, for solubilizing a hydrophobic compound such as a lipid, a pigment such as a carotenoid, and a terpenoid.

Said use of an amphiphilic, deep eutectic solvent (DES) according to the invention, preferably comprises imidazole as DES hydrophilic compound, and hexanoic acid or octanoic acid as DES hydrophobic compound, preferably present in a molar ratio between 1:1 and 1:3, DL-menthol as DES hydrophobic compound and acetic acid as DES hydrophilic compound, preferably present in a molar ratio between 2:1 and 1:5, preferably between 1:1 and 1:3, or tetrabutylammonium bromide as DES hydrophilic compound and DL-menthol as DES hydrophobic compound, preferably present in a molar ratio between 2:1 and 1:5, preferably between 1:2 and 1:4.

FIGURE LEGENDS

Figure 1. The solubility of water and hydrophobic model compounds in imidazole/hexanoic acid with different molar ratios.

Figure 2. Oil back-extraction by changing imidazole molar ratio (left to right: 25%, 40%, 50%, 60% and 75%). The starting molar ratio of imidazole for oil extraction was 25%. The arrows show the interfaces between the lighter oil-rich and denser DES-rich phase. At 75%-imidazole content, the undissolved imidazole forms a third solid phase.

Figure 3. a) Oil back-extraction efficiency and b) fatty acid content of back-extracted oil.

DETAILED DESCRIPTION OF THE INVENTION

*Definitions*

The term "deep eutectic solvent" or "DES", as is used herein, refers to a liquid that has a melting point that is lower than the melting points of the two or more compounds, herein after termed DES hydrophilic and DES hydrophobic compound, that constitute the eutectic solvent. Self-association of the DES hydrophilic and DES hydrophobic compound may occur via ionic interactions, hydrogen bonding and/or van der Waals forces between said DES hydrophilic and DES hydrophobic compounds.

The term "amphiphilic", as is used herein, refers to a chemical entity such as some DES, that possess both hydrophilic and hydrophobic properties. Common amphiphilic substances are soaps, detergents, and lipoproteins. An amphiphilic DES may dissolve both hydrophobic and hydrophilic compounds.

The term "DES hydrophilic compound", as is used herein, refers to a hydrophilic acid or hydrophilic base that may serve as an hydrogen donor or hydrogen acceptor in a DES.

The term "DES hydrophobic compound", as is used herein, refers to a hydrophobic acid or hydrophobic base that may serve as an hydrogen donor or hydrogen acceptor in a DES.

The term "log Poet", as is used herein, refers to the logarithm of the partition coefficient of a compound in a biphasic octanol/water system. The term is used as a descriptor for the capacity of a compound to form intramolecular hydrogen bonding. Log Poet values of individual components preferably are averaged, assuming that no reaction occurs in the binary mixture.

The term "menthol" or "DL-menthol", as is used herein, refers to an organic compound that can be obtained from peppermint or mint oils. Natural menthol exists as a pure stereoisomer, which is nearly always the (1R,2S,5R) form.

*Deep eutectic solvents*

An amphiphilic DES according to the invention comprises a DES hydrophilic compound and a DES hydrophobic compound, whereby one of said DES hydrophilic compound and DES hydrophobic compound functions as a Bronsted hydrogen donor (Bronsted acid), and the other one functions as a Bronsted hydrogen acceptor (Bronsted base). One can tune the degree of hydrophobicity by changing the molar ratio between the DES hydrophilic compound and the DES hydrophobic compound, i.e. by adding either the DES hydrophilic compound or the DES hydrophobic compound. The dominant species would likely to govern the overall property. However, in combinations that lead to ion formation, the ions will be the actual driver of the hydrophilicity. By either adding the hydrophilic compounds or producing more ions, the DES can be manipulated to be hydrophilic. These hydrophilic state can then be used to back-extract the hydrophobic solutes or to extract more hydrophilic solutes.

It is hypothesized that the Bronsted acid and base can interact in two ways: 1) ionic interactions, or 2) hydrogen bonding. The former is based on permanent charges of the protonated base and deprotonated acid which can strongly interact with water and hence becomes hydrophilic. The latter relies on the innate property of the compounds as there is no chemical reaction involved.

Examples of Bronsted acids and bases are hydrophobic acids such as medium-chain (C6-C12) carboxylic acids, preferably C8-C12 carboxylic acids; hydrophilic bases such as heteroaromatics including imidazole-like compounds; tertiary amines such as lidocaine and trimethylamine-like compounds; hydrophilic acids such as short-chain (C1-C8) carboxylic acids, preferably C1-C6 carboxylic acids, aromatic carboxylic acid such as phenylacetic acid; short-chain quaternary ammonium salts such as tetrabutylammonium bromide and tetra-alkylammonium salt; hydrophobic bases such as monoterpenoids with a hydroxyl group including menthol and thymol; and heteroaromatics such as pyrazole.

It will be clear to a person skilled in the art that the borders between Bronsted acids and bases, and between hydrophobic and hydrophilic compounds is not sharp, and some compounds may act in a dual fashion. For example, C6 carboxylic acid may act as a hydrophilic Bronsted acid in the presence of, for example, pyrazole as hydrophobic base; and as a hydrophobic Bronsted acid in the presence of imidazole as hydrophilic compound. Similarly, compounds may be a weak Bronsted acid in the presence of a strong Bronsted base, while being a weak Bronsted base in the presence of a strong Bronsted acid.

Preferred combinations of Bronsted acids and bases include hydrophobic bases such as monoterpenoids or heteroaromatics as hydrophobic base and a short-chain (C1-C6) fatty acid as hydrophilic acid. Examples of such combinations are DL-menthol (2-isopropyl-5-methylcyclohexanol) as hydrophobic base and acetic acid, phenylacetic acid, or 3-phenylpropanoic acid as hydrophilic acid; or pyrazole (1,2-diazacyclopenta-2,4-diene) as hydrophobic base and acetic acid or hexanoic acid as hydrophilic acid.

Further preferred examples include heteroaromatics, tertiary amines or short-chain quaternary ammonium salts such as imidazole (1,3-diazacyclopenta-2,4-diene), lidocaine (2-di-ethylamino-N-(2,6-dimethylfenyl)-ethaanamide), Aliquat® 336 (9-octanoyl-8,10-dioxoheptadecan-9-yl)azanium; chloride), or tetrabutylammonium bromide (TBAB) as hydrophilic base, and a medium-chain (C6-C12) acid or a monoterpenoid with hydroxyl group such as hexanoic acid, octanoic acid or DL-menthol as a hydrophobic acid.

It will be clear to a person skilled in the art that a suitable amphiphilic DES may comprise mixtures of Bronsted acids and/or Bronsted bases such as, for example, a mixture of medium-chain (C6-C12) acids such as hexanoic acid and octanoic acid as hydrophobic acid, and/or a mixture of imidazole and lidocaine as hydrophilic base.

A hydrophilic DES may have a low, or even negative, average log Poet value, while a hydrophobic DES has a positive average log Poet value. An arbitrary boundary may be set at an average log Poet value of 3.5, as combinations with estimated values higher than 3.5 may be too hydrophobic, rendering it difficult to use this DES for back-extraction.

Preferred amphiphilic DES have an average log Poet value of between 0.9 and 2.5, such as between 0.92 and 2.52, since they are capable of dissolving a hydrophobic compound such as dodecane and a hydrophilic compound such as water. Suitable DES mixtures comprise both polar/ionic and nonpolar compounds, e.g., imidazole/hexanoic acid, TBAB/DL-menthol, and DL-menthol/acetic acid.

Based on the average log Poet value of the DES hydrophilic compound and the DES hydrophobic compound, a person skilled in the art will be able to generate further suitable amphiphilic DESs. Log Poet values for different compounds have been described in, for example, Abraham et al., 2010 (Abraham et al., 2010. J Pharm Sci 99: 1500-15). Log Poet values may further be obtained from, for example, pubchem.ncbi.nlm.nih.gov, chemspider.com, chemeo.com, vcclab.org/lab/alogps and chemicalize.com/welcome#/calculation, as is known to a person skilled in the art.

However, some DES mixtures comprising TBAB or Aliquat® 336 dissolve neither water nor dodecane, despite having log P values of 1.83 - 3.33. Without being bound by theory, the dipolarity of TBAB/hexanoic acid and TBAB/octanoic acid is in between that of the highly polar choline choride-based DESs and the nonpolar DL-menthol-based DESs (Florindo et al., 2017. Phys Chem Chem Phys 20: 206-213; Teles et al., 2017. Fluid Phase Equilib 448: 15-21), which medium polarity could explain the low affinity towards both water and dodecane.

In addition, DESs comprising DL-menthol and imidazole, or TBAB and decanoic acid were not stable when mixed with water. In both cases, the hydrophilic components (imidazole and TBAB) leached to the aqueous phase, leaving behind their hydrophobic counterparts which then turned solid (Tm = 43 and 32°C for menthol and decanoic acid, respectively). This might occur due to the large difference in hydrophobicity of individual components ($\Delta$log Poet = 3.37 and 2.36, respectively).

A suitable amphiphilic DES comprises a hydrophilic acid as a DES hydrophilic compound. Said hydrophilic acid preferably is selected from short-chain (C1-C6) fatty acids, aromatic carboxylic acid such as phenylacetic acid, and/or short-chain quaternary ammonium salts such as tetrabutylammonium bromide and/or tetraalkylammonium salt. Said DES preferably comprises a hydrophobic base selected from monoterpenoids with a hydroxyl group such as menthol or thymol, and/or selected from heteroaromatics such as pyrazole, as a DES hydrophobic compound.

Said hydrophilic acid and hydrophobic base selected from monoterpenoids with a hydroxyl group such as thymol, and/or selected from heteroaromatics such as pyrazole, preferably are present in a molar ratio of between 1:1 and 1:5, such as between 1:2 and 1:4, including 1:3.

A preferred amphiphilic DES comprises tetrabutylammonium bromide as DES hydrophilic compound, and DL-menthol as DES hydrophobic compound. Said DES hydrophilic compound and DES hydrophobic compound are preferably present in a molar ratio between 1:2 and 1:4.

A further suitable amphiphilic DES comprises a hydrophilic base selected from heteroaromatics such as imidazole-like compounds and tertiary amines such as lidocaine and trimethylamine-like compounds, as DES hydrophilic compound. Said DES preferably comprises a hydrophobic acid selected from medium-chain (C6-C12) carboxylic acids, preferably from C8-C12 carboxylic acids, as DES hydrophobic compound.

Said hydrophilic base and hydrophobic acid preferably are present in a molar ratio of between 1:1 and 1:5, such as between 1:2 and 1:4, including 1:3.

A preferred amphiphilic DES comprises imidazole as DES hydrophilic compound, hexanoic acid and/or octanoic acid as DES hydrophobic compound. preferably present in a molar ratio between 1:1 and 1:3, or wherein the DES hydrophobic compound is DL-menthol and the DES hydrophilic compound is acetic acid, preferably present in a molar ratio between 1:1 and 1:3.

*Extraction methods*

Compared with conventional organic solvents, DES as extractants are eco-friendly, non-toxic, and biodegradable. Furthermore, they are easy to produce at low costs.

With DES extractants according to the invention, one can extract and fractionate various classes of lipids, such as triacylglycerol (TAG), polar lipids such as phospholipids, and both saturated and unsaturated fatty acids like omega 3 fatty acids. Furthermore, pigments such as carotenoids, including beta-carotene, fucoxanthin, and astaxanthin, chlorophyll, and also terpenoids may be the target of extraction.

A suitable source for extracting and fractionating various classes of lipids is a biological source such as plants, algae, bacteria, yeasts, fungi and heterotrophic, fungus-like *Stramenopiles* termed *Thraustochytrids.* For example, *Thraustochytrids* are known to produce large amounts of docosahexaenoic (DHA) and eicosapentaenoic (EPA) $\omega$-3-fatty acids.

Any conventional direct solvent extraction method, such as infusion, decoction, percolation, maceration, negative pressure cavitation extraction, supercritical fluid extraction, accelerated solvent extraction, matrix solid-phase dispersion, and/or reflux, may be used for extraction of compounds from plant or algal material by a DES. If required, extraction at room temperature or even at a lower temperature such as 0 °C, may be a preferable technique to avoid degradation of thermolabile compounds. For example, most essential oil components are sensitive to high temperatures and will degrade, causing undesirable effects in the properties of the oil. Shortening the required extraction time, and/or lowering the extraction temperature, may be a way of avoiding damage caused by high temperature.

Prior to extraction the material such as plant or algal material may be crushed, for example by powdering after air-drying. The crushed material may be mixed with a DES. The resulting mixture may be stirred, for example at 10-1000 rpm such as 100 rpm, at a temperature of, for example, 0°C - 100 °C such as 40 °C, for a period of time such as, for example, between 1 minute and 1 day, such as for 30 min. Following incubation, the mixture may be centrifuged, for example at 1300 rpm for 20 min, and/or filtered for example through a 0.45 micrometer cellulose acetate membrane filter. Said extraction may be assisted by, for example, ultrasound such as, for example, in an ultrasonicator bath at 40 °C for 30 min, and/or microwave, as is known to a person skilled in the art.

Standard chromatography tools such as high-performance liquid chromatography (HPLC), thin-layer chromatography (TLC) and gas chromatography (GC), either alone or coupled to, for example, mass spectrometry, may subsequently be used to establish extraction profiles of DES that were applied on biological materials such as plant material. On the basis of such chromatographic profiles, one can establish which target compounds were extracted and solubilized in a DES with high efficiency and/or selectivity.

A DES of the invention may be used in a method for extracting one or more hydrophobic compounds such as a lipid, a pigment such as a carotenoid, and a terpenoid, from a source of said hydrophobic compound, by extracting said source with an amphiphilic, deep eutectic solvent according to the invention.

A preferred method comprises back-extracting the hydrophobic compound from the amphiphilic, deep eutectic solvent by addition of the DES hydrophilic compound to the DES-extract. The addition of the DES hydrophilic compound will render the DES more hydrophilic, resulting in separation of the hydrophobic compound.

Following the extraction of the one or more hydrophobic compounds, one or more hydrophilic compounds may additionally be extracted from the residual source by addition of the DES hydrophilic compound.

In addition, a DES according to the invention may be used for dissolution of one or more compounds, such as purified compounds.

*Tuning hydrophobicity*

One can tune the degree of hydrophobicity of a DES according to the invention by changing the molar ratio between the acid and base, e.g., by adding the acid or base. The dominant species would likely to govern the overall property. However, in the combinations that lead to ion formation, the ions are the actual driver of its hydrophilicity. By either adding the hydrophilic compounds or producing more ions, the DES can be manipulated to be hydrophilic. These hydrophilic state can then be used to back-extract the hydrophobic solutes or to extract more hydrophilic solutes.

A preferred amphiphilic DES comprises imidazole as DES hydrophilic compound and hexanoic acid as DES hydrophobic compound. This DES has a tuneable hydrophobicity. Imidazole is a polar compound and hexanoic acid is a hydrophobic compound. The combination can be made to be hydrophilic by adding more imidazole. At 20 mol% imidazole, the DES is hydrophobic, whereas it becomes hydrophilic at 40 mol% imidazole. In this case, imidazole and hexanoic acid interact via proton transfer and produce imidazolium hexanoate ions. DES with low content of imidazole is hydrophobic, because there is a low amount of ions. However, with more imidazole in the system, more ions are formed and hence making it hydrophilic. This modification requires negligible energy input. Through this principle, almost 100% of dodecane and 75% of algae oil was back-extracted with relatively high purity (>75%). DESs hold the potential as an alternative technology in lipid extraction.

EXAMPLES

This work is a part of MAGNIFICENT (Microalgae As a Green source from Nutritional Ingredients for Food/Feed and Ingredients for Cosmetics by cost-Effective New Technologies) project, funded by Bio-based Industries Join Technology Initiative under Horizon 2020 of the European Research Council (project ID: 745754).

Example 1

*Materials and methods*

The initial compounds of deep eutectic solvents (DESs) used in this study are included in Table 1. Model oils used in this study were dodecane (VWR Chemicals, 99%), commercial sunflower oil (Jumbo Supermarkten B.V., The Netherlands), cod liver oil (Jacob Hooy & Co B.V., The Netherlands) and culinary algae oil (Corbion Biotech, Inc., United States).

The deep eutectic solvents were made by mixing the proper combination of acids and bases at 20 - 60°C until clear and homogeneous liquid solutions were formed. No prior purification step was performed. The mixtures that didn't stay homogenous for at least 24 hours were categorized as unstable. The stable mixtures were then further characterized based on their miscibility with water and dodecane.

Melting points were determined using differential scanning calorimetry at 10 °C/min. This may have resulted in some inaccuracy of the actual melting point.

The solubility of water, dodecane and three lipids in DES was measured by means of cloud point determination method. These model compounds were added dropwise until the system reached saturation, shown by turbid mixtures. The amount of added oils was measured with an analytical balance ($\pm$0.1 mg).

Analysis of dodecane and lipid was performed by means of gas chromatography - flame ionization detector (GC-FID, Agilent 7890, United States). Prior to the analysis, transesterification was performed on the lipid samples (~5 mg) by adding 3 mL of methanol & 5% H2SO4 at 70°C for 3 hours. Then, the methylated products were extracted using hexane and analysed, using C15:0 FAME as an internal standard. For dodecane samples, the samples were diluted using chloroform with tetradecane as an internal standard.

The back-extraction experiment was performed by first dissolving near-saturation amount of lipids (70 wt% for dodecane and sunflower oil; 30 wt% for cod liver and algae oil) in DES imidazole/hexanoic acid (1:3), at which the DES hydrophobicity starts to shift. Then, imidazole was added accordingly to reach 40, 50, 60, and 75 mol% of the DES. The imidazole was let to dissolve overnight to ensure the equilibrium was reached. The oil phase was then separated from the DES phase by means of centrifugation and decantation. Both phases were analysed with gas chromatography. Back-extraction efficiency (E) is calculated based on formula:

$$E = \frac{c_T \, V_T}{c_T \, V_T + c_B \, V_B}$$

where c is concentration of oil/dodecane at a phase, V is total amount of a phase, subscript T and B represent the top and bottom phase.

*Results*

Several screening steps were performed on possible combinations of binary mixtures to obtain amphiphilic deep eutectic solvents. It was concluded that most selected starting materials yielded stable amphiphilic deep eutectic solvents. As is indicated in Table 2, the molar ratio between a Bronsted acid and a Bronsted base in a stable amphiphilic deep eutectic solvents was mainly determined by the presence of a solid component. In general, the ratio's between a Bronsted base and a Bronsted acid were between 5:1 and 1:5, but in case of a liquid Bronsted acid the amount of the liquid Bronsted acid in principle is not limited. Some melting points of selected amphiphilic deep eutectic solvents and individual components are provided in Table 3.

**Table 1.** List of chemicals used to prepare deep eutectic solvents and their hydrophobicity

| Compound | Supplier, purity | Brønsted- | Log $P_{oct}$ (Pub Chem) |
|---|---|---|---|
| Acetic acid | Sigma -Aldrich, 100% | acid | -0.17 |
| Aliquat® 336 (Methyltrioctylammonium chloride) | Alfa Aesar | base | 6.74* |
| Butyric acid | Sigma-Aldrich, ≥99% | acid | 0.79 |
| Decanoic acid | Sigma -Aldrich, ≥98% | acid | 4.09 |
| Hexanoic acid | Sigma -Aldrich, ≥99% | acid | 1.92 |
| Imidazole | Sigma -Aldrich, ≥99% | acid/base | -0.08 |
| Octanoic acid | Acros Organics, 99% | acid | 3.05 |
| DL-Menthol | Sigma-Aldrich, ≥98% | acid/base | 3.20 |
| Tetrabutylammonium bromide (TBAB) | Sigma-Aldrich, ≥99% | HBA | 1.73* |
| *) Simulated by VCCLAB, Virtual Computational Chemistry Laboratory | | | |

Initially, log Poet values of each possible combination were estimated by averaging the log Poet values of the individual components. This was done with assumption that no reaction occurs in the binary mixture. The average also means that this estimation does not take the molar composition into consideration. The estimated values are shown in Table 4. The most hydrophilic mixture (imidazole/acetic acid) has a log Poet value of -0.13, while the highest log P value is from Aliquat® 336/decanoic acid (5.4). However, an arbitrary high boundary was set to be 3.5, as combinations with estimated values above 3.5 are too hydrophobic, thus impossible to back-extract.

These combinations were then prepared and experimentally characterized. Molar ratios of the mixtures were adjusted based on the melting point of their component, so that the combinations could form liquid at room temperature. Furthermore, the miscibility of DES mixtures with water or dodecane was evaluated. The result of this experimental screening is also shown in Table 4.

Based on the miscibility with water and dodecane, the DESs were categorized into four categories: (i) hydrophobic DESs which dissolve only dodecane (Type 1), (ii) hydrophilic DESs which dissolve only water (Type 2), (iii) amphiphilic DESs which dissolve both compounds (Type 3), and (iv) DESs which dissolve neither (Type 4). As expected, DESs with high estimated log P values (2.56 - 3.33) were hydrophobic. On the other hand, hydrophilic solutions made of polar or charged molecules, like imidazole, TBAB, acetic acid, and butyric acid, have a low log P values (< 0.83).

Amphiphilic DES (log P = 0.92 - 2.52) is the category of interest since they are capable of dissolving both dodecane and water. These mixtures are mainly composed of both polar/ionic and nonpolar compounds, e.g., imidazole/hexanoic acid, TBAB/DL-menthol, and DL-menthol/acetic acid. Besides that, there are also DESs composed of TBAB/hexanoic acid, TBAB/octanoic acid, and Aliquat® 336/imidazole which dissolve neither water nor dodecane, despite having log P values of 1.83 - 3.33. According to literature, the dipolarity of TBAB/hexanoic acid and TBAB/octanoic acid is in between that of the highly polar choline choride-based DESs and the nonpolar DL-menthol-based DESs (Florindo et al., 2017. Phys Chem Chem Phys 20: 206-213; Teles et al., 2017. Fluid Phase Equilib 448: 15-21). This medium polarity of these mixtures could explain the low affinity towards both water and dodecane.

In general, the calculated log P values show correlation with the physicochemical property of the formed mixtures. Thus, the log P estimation method can be useful for this screening purpose. Also, all these results support the works of Florindo et al., 2017 (Florindo et al., 2017. Phys Chem Chem Phys 20: 206-213) and Teles et al., 2017 (Teles et al., 2017. Fluid Phase Equilib 448: 15-21), which reported that the dipolarity of DES is determined by both acids and bases, with a stronger influence from the latter. In our screening results, the extremely hydrophobic Aliquat® 336 does not create amphiphilicity even when paired with acetic acid. Additionally, imidazole, which has an amphiphilic nature, can form amphiphilicity when mixed with various acids. Moreover, the TBAB-based DESs are in general more hydrophilic than the DL-menthol-based since TBAB is a salt while DL-menthol is a neutral compound. This effect can be more obviously seen when they are mixed with hexanoic and octanoic acids. These result are in line with what has been reported (Florindo et al., 2017. Phys Chem Chem Phys 20: 206-213).

Table 2.

| No. | Bronsted base | Bronsted acid | Solid component | Range of molar ratio (base:acid)* |
|---|---|---|---|---|
| 1 | DL-Menthol | C1 - C3 | base | 2:1 - |
| 2 | DL-Menthol | Aromatic carboxylic acid | *both* | 4:1 - 1:3 |
| 3 | Pyrazole | C1 - C6 | base | 2:1 - |
| 4 | Imidazole | C6 - C8 | base | 2:1 - |
| 5 | Lidocaine | C4 - C8 | base | 1:1 - |
| 6 | TBAB | DL-Menthol | *both* | 1:3 - 1:4 |
| *There is no upper limit if the Brønsted acid is a liquid | | | | |

Table 3. Melting points.

| Compounds | Tm [C] | Reference |
|---|---|---|
| Acetic acid | 16.6 | PubChem |
| Aliquat 336 | -20 | ChemSpider |
| Butyric acid | -5.7 | PubChem |
| Decanoic acid | 31.9 | PubChem |
| Hexanoic acid | -3 | PubChem |
| Imidazole | 90.5 | PubChem |
| Octanoic acid | 16.3 | PubChem |
| DL-Menthol | 34 | ChemSpider |
| Tetrabutylammonium bromide | 103 | ChemSpider |
| Hexanoic acid | 3 | This work |
| Imidazole/Hexanoic acid (1:9) | -1.1 | This work |
| Imidazole/Hexanoic acid (1:3) | 8 | This work |
| Imidazole/Hexanoic acid (1:2) | 3.8 | This work |
| Imidazole/Hexanoic acid (2:3) | -0.6 | This work |
| Imidazole/Hexanoic acid (1:1) | -71.2 | This work |
| Imidazole/Hexanoic acid (2:1) | -71.2 | This work |
| Imidazole/Hexanoic acid (3:1) | 46 | This work |
| Imidazole/Hexanoic acid (9:1) | 77.3 | This work |
| Imidazole | 95 | This work |
| Octanoic acid | 22.7 | This work |
| Imidazole/Octanoic acid (1:9) | 18.6 | This work |
| Imidazole/Octanoic acid (1:3) | 20.5 | This work |
| Imidazole/Octanoic acid (1:2) | 19.1 | This work |
| Imidazole/Octanoic acid (1:1) | 9 | This work |
| Imidazole/Octanoic acid (2:1) | -71.2 | This work |
| Imidazole/Octanoic acid (3:1) | 46.9 | This work |
| Imidazole/Octanoic acid (9:1) | 75.8 | This work |
| Imidazole | 95 | This work |
| Acetic acid | 22 | This work |
| Aliquat 336/Acetic acid (1:9) | 5.9 | This work |
| Aliquat 336/Acetic acid (1:3) | < -100 | This work |
| Aliquat 336/Acetic acid (1:2) | -29.9 | This work |
| Aliquat 336/Acetic acid (1:1) | -31.2 | This work |
| Aliquat 336/Acetic acid (2:1) | -19.9 | This work |
| Aliquat 336/Acetic acid (3:1) | -14.8 | This work |
| Aliquat 336/Acetic acid (9:1) | -13.9 | This work |
| Aliquat 336 | -8.4 | This work |

Table 4

| Bronsted bases | Bronsted acids | log Poet mix | Minimal molar ratio (base: acid) | Water miscibility | Dodecane miscibility | Type |
|---|---|---|---|---|---|---|
| Aliquat® 336 | Acetic acid | 3.29 | 1:2 | NO | YES | 1 |
| Aliquat® 336 | Imidazole | 3.33 | 1:1 | NO | NO | 4 |
| Imidazole | Acetic acid | -0.13 | 1:2 | YES | NO | 2 |
| Imidazole | Butyric acid | 0.36 | 1:2 | YES | NO | 2 |
| Imidazole | Decanoic acid | 2.01 | solid | n.a. | n.a. | |
| Imidazole | Hexanoic acid | 0.92 | 2:1 | YES | YES | 3 |
| Imidazole | Octanoic acid | 1.49 | 1:2 | YES | YES | 3 |
| DL-Menthol | Acetic acid | 1.52 | 1:2 | YES | YES | 3 |
| DL-Menthol | Butyric acid | 2.00 | 1:2 | NO | YES | 1 |
| DL-Menthol | Hexanoic acid | 2.56 | 1:2 | NO | YES | 1 |
| DL-Menthol | Imidazole | 1.56 | 3:1 | *unstable* | YES | |
| DL-Menthol | Octanoic acid | 3.13 | 1:2 | NO | YES | 1 |
| TBAB | Acetic acid | 0.78 | 1:3 | YES | NO | 2 |
| TBAB | Butyric acid | 1.26 | 1:2 | YES | NO | 2 |
| TBAB | Decanoic acid | 2.91 | 1:2 | *unstable* | YES | |
| TBAB | Hexanoic acid | 1.83 | 1:2 | NO | NO | 4 |
| TBAB | Imidazole | 0.83 | 1:2 | YES | NO | 2 |
| TBAB | DL-Menthol | 2.47 | 1:3 | YES | YES | 3 |
| TBAB | Octanoic acid | 2.39 | 1:2 | NO | NO | 4 |

There is also another interesting phenomenon observed during this study that combinations of DL-menthol/imidazole and TBAB/decanoic acid are not stable when mixed with water. In both cases, the hydrophilic components (imidazole and TBAB) leached to the aqueous phase, leaving behind their hydrophobic counterparts which then turned solid (Tm = 43 and 32°C for menthol and decanoic acid, respectively). This might occur due to the large difference in hydrophobicity of individual components ($\Delta$log Poet = 3.37 and 2.36, respectively). This agrees with the work of other authors that reported leaching of tetrabutylammonium chloride (TBAC) when DES TBAC/octanoic acid or TBAC/decanoic acid mixed with water (Florindo et al., 2017. Fluid Phase Equilib 448: 135-142; Van Osch et al., 2015. Green Chem 17: 4518-4521). Besides that, leaching of acetic acid also occurred when DL-menthol/acetic acid mixed with water (Florindo et al., 2017. Fluid Phase Equilib 448: 135-142).

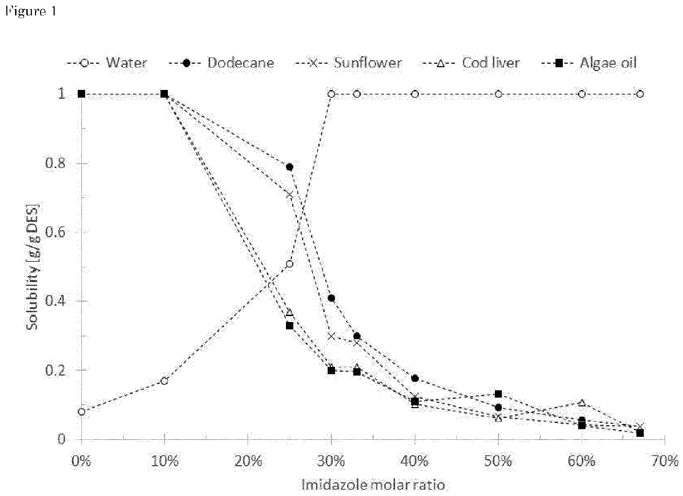

Imidazole/hexanoic acid was chosen as a proof of principle of the proposed back-extraction strategy since it has the lowest log P value among the amphiphilic DESs. To prove the shift in hydrophobicity, solubility of water, dodecane and selected lipids are measured in this DES with different molar fraction. This characterisation was performed up to 67 mol% imidazole since imidazole is not soluble at higher concentration. Figure 1 shows that this combination has a tuneable hydrophobicity, depending on the molar composition of imidazole and hexanoic acid. At low concentrations of imidazole (< 20 mol% imidazole), the DES is completely miscible with dodecane, signifying its strong hydrophobic property. However, the solubility of dodecane declines, while that of water rises at higher imidazole molar fraction. A complete miscibility with water was achieved at $\geq$ 30 mol% imidazole.

Like dodecane, the solubility of model oils also decreases at higher imidazole content. However, the solubility of dodecane is slightly higher than the oils. This is expected since the dodecane molecule has a smaller molecular size compared to the oils. Moreover, the solubility differs among the oils, with an ascending order: algae oil, cod liver oil and sunflower oil. This variation might correlate with the presence of polar lipids and unsaturated fatty acids. About 10% of the fatty acids in sunflower oil is polar lipids, while that of algae oil and cod liver oil is only 6-7%. Furthermore, the sunflower oil is dominated by polyunsaturated linoleic acid (58%), meanwhile cod liver and algae oil are mainly composed of monounsaturated fatty acids (54% and 95%, respectively). Both polar group and unsaturated fatty acids could enhance the dipolarity of the lipid and thus the dipole-dipole interaction between lipid solute and DES.

Despite the high content of hexanoic acid and the amphiphilic nature of imidazole, the DES has a strong affinity towards water and weak affinity towards dodecane at > 30 mol% imidazole content. Therefore, the shift of its physicochemical property could not be explained solely by which molecule is dominant. Additionally, imidazole is a weak base (pKb = 7.05), while hexanoic acid is a weak acid (pKa = 4.88). This means that instead of normal hydrogen bonding, imidazole and hexanoic acid may be involved in an acid-base reaction. This proton transfer reaction forms imidazolium cation and hexanoate anion, which is also indicated by the increasing pH values when imidazole is added (data not shown). In fact, ionic liquid imidazolium hexanoate was prepared from imidazole and hexanoic acid at 1:1 molar ratio (Anouti et al., 2009. J Colloid Interface Sci 340: 104-111.). The presence of ionic species could describe the high affinity of DES towards water and aversion for the nonpolar oils. Therefore, this DES might as well be a mixture of hexanoic acid/imidazolium hexanoate at < 50 mol% imidazole or imidazole/imidazolium hexanoate at > 50 mol% imidazole.

Therefore, by changing the composition ratio, the hydrophobicity of imidazole/hexanoic acid can be fine-tuned. This principle can be used as a back-extraction strategy of lipids and other hydrophobic molecules. In fact, this back-extraction strategy is somehow favourable since there is no addition of other compounds, such as antisolvent or a switching agent which need to be removed later. Furthermore, this strategy does not involve high energy demand, like evaporation of the solvent.

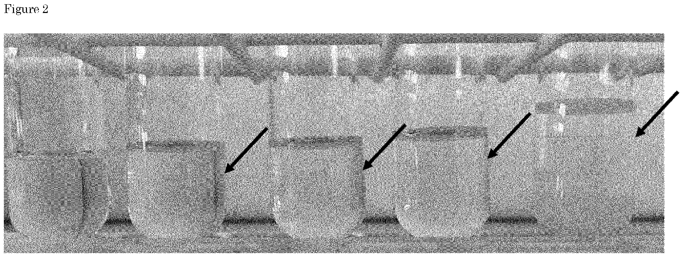

Figure 2 shows the difference in sunflower oil miscibility in DES with various imidazole concentration. At 25 mol% imidazole, which is the initial extraction condition, the oil is still fully dissolved in DES. However, at higher molar fractions of imidazole, phase split occurs due to the separation of oil and DES. Based on the density, the oil or dodecane phase is formed at the top while the heavier DES formed at the bottom. This back-extraction experiment was also performed at 75 mol% imidazole, which was beyond its solubility limit (shown by white solids), to ensure the maximum dissolved imidazole.

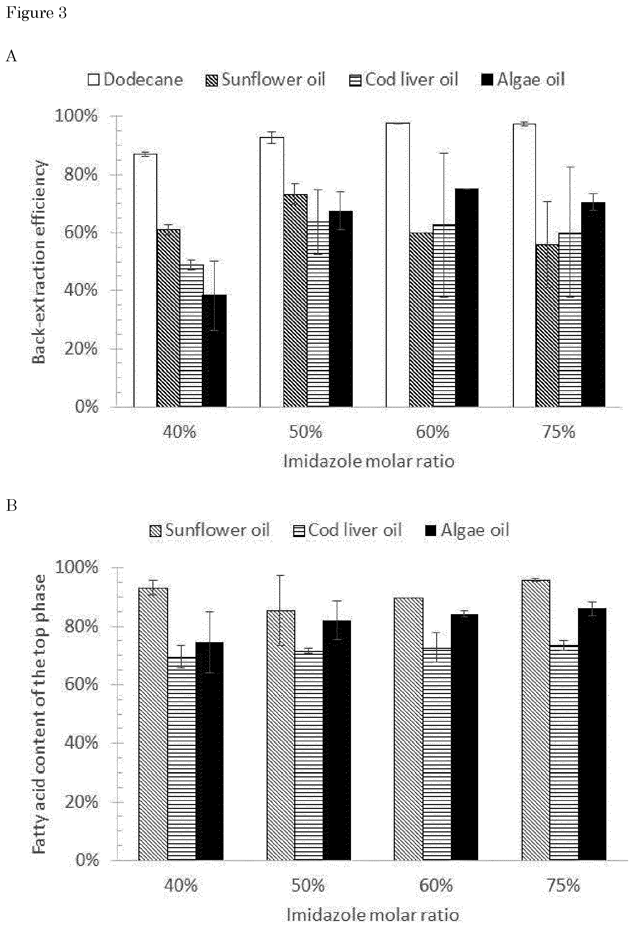

The back-extraction efficiency of each hydrophobic solute is shown in Figure 3a. The overall trend is that the more imidazole, the higher the back-extraction efficiency. Back-extraction of dodecane reached 97% efficiency at > 60 mol% imidazole. While sunflower and cod liver oil achieved the highest back-extraction at 50 mol% imidazole with respective efficiency of 73% and 64%, algae oil achieved 75% efficiency at 60 mol% imidazole. Furthermore, Figure 3b shows the oil purity of the top phases, which indicates the quality of the back-extracted oils. In general, the purity of back-extracted each oil does not differ significantly with respect to different imidazole fractions. Sunflower oil achieved 80-90% purity, cod liver oil 67-71% and algae oil 68 - 78%. Additionally, dodecane also achieved ~100% purity based on GC analysis. Besides the initially dissolved vitamins, the possible impurities of these oils include hexanoic acid, imidazole, and their derivatives. In all top phases, hexanoic acid did not reach beyond 5% and it decreases at higher imidazole molar fraction, reaching only 2%. At the same time, the remaining mass would consist of several possible compounds, i.e., imidazole, glycerol, polar group of lipids, and vitamins.

Despite having similarities in the solubility profile at Figure 1, the back-extraction efficiency between different molecules also varies, especially in the case of cod liver oil and algae oil. The reason behind this is not fully understood. However, the large difference between the back-extraction efficiency of dodecane and the oils might be related to the different molecular size, polarity and composition. Unlike dodecane, which is smaller and completely hydrophobic, the oil molecules are larger and contain ester groups and unsaturated fatty acid which create a slight dipolarity. Through this dipolarity, lipid molecules can establish stronger interactions with the DES molecules. Moreover, the formation of top phases involve distribution of molecules based on their partition equilibria, which is not the case in the solubility measurement in a single phase.

Having a high back-extraction efficiency, the proposed strategy shows a promising potential, especially as it requires a low energy input. Furthermore, it yields oils with a high purity of fatty acids. It is worth noting that this back-extraction technique can still be improved and optimized. Besides that, the regeneration of DES imidazole/hexanoic acid to its initial ratio is still lacking. One can simply add hexanoic acid to re-adjust the molar composition and re-use it for the next extraction cycle.

## Claims

1. An amphiphilic, deep eutectic solvent (DES), comprising a DES hydrophilic and a DES hydrophobic compound, wherein said deep eutectic solvent is **characterized by** hydrogen bonds, ionic interactions and/or van der Waals forces between said DES hydrophilic and DES hydrophobic compounds.

2. The amphiphilic, deep eutectic solvent of claim 1, wherein the DES hydrophilic compound is a hydrophilic acid selected from short-chain (C1-C6) fatty acids, aromatic carboxylic acid such as phenylacetic acid, and short-chain quaternary ammonium salts such as tetrabutylammonium bromide and tetraalkylammonium salt.

3. The amphiphilic, deep eutectic solvent of claim 1 or claim 2, wherein the DES hydrophobic compound is a hydrophobic base selected from monoterpenoids with a hydroxyl group such as menthol or thymol, and heteroaromatics such as pyrazole.

4. The amphiphilic, deep eutectic solvent of any one of claims 1-3, wherein DES hydrophilic compound is tetrabutylammonium bromide and the DES hydrophobic compound is DL-menthol, preferably present in a molar ratio between 2:1 and 1:5.

5. The amphiphilic, deep eutectic solvent of claim 1, wherein the DES hydrophilic compound is a hydrophilic base selected from heteroaromatics such as imidazole-like compounds and tertiary amines such as lidocaine and trimethylamine-like compounds.

6. The amphiphilic, deep eutectic solvent of claim 1 or claim 5, wherein the DES hydrophobic compound is a hydrophobic acid selected from medium-chain (C6-C12) fatty acids.

7. The amphiphilic, deep eutectic solvent of any one of claims 1, 4 and 5, wherein the DES hydrophilic compound is imidazole and the DES hydrophobic compound is hexanoic acid or octanoic acid, preferably present in a molar ratio between 2:1 and 1:5, or wherein the DES hydrophobic compound is DL-menthol and the DES hydrophilic compound is acetic acid, preferably present in a molar ratio between 2:1 and 1:5.

8. A method for extracting a hydrophobic compound such as a lipid, a pigment such as a carotenoid, and a terpenoid, comprising providing a source of said hydrophobic compound, and extracting said source with the amphiphilic, deep eutectic solvent according to any one of claims 1-7.

9. The method of claim 8, further comprising back-extracting the hydrophobic compound from the amphiphilic, deep eutectic solvent by addition of the DES hydrophilic compound.

10. The method of claim 8 or claim 9, further comprising extracting one or more hydrophilic compounds from the amphiphilic, deep eutectic solvent by addition of the DES hydrophilic compound.

11. The method of any one of claim 8-10, wherein the source of said hydrophobic compound is a biological source such as plant or algal material.

12. The method of any one of claim 8-11, wherein the DES hydrophilic compound is imidazole and the DES hydrophobic compound is hexanoic acid.

13. Use of an amphiphilic, deep eutectic solvent (DES), comprising a DES hydrophilic and a DES hydrophobic compound, wherein said deep eutectic solvent is **characterized by** hydrogen bonds between said DES hydrophilic and DES hydrophobic compounds, for extracting a hydrophobic compound such as a lipid, a pigment such as a carotenoid, and a terpenoid, from a source of said hydrophobic compound.

14. Use of an amphiphilic, deep eutectic solvent (DES), comprising a DES hydrophilic and a DES hydrophobic compound, wherein said deep eutectic solvent is **characterized by** hydrogen bonds between said DES hydrophilic and DES hydrophobic compounds, for solubilizing a hydrophobic compound such as a lipid, a pigment such as a carotenoid, and a terpenoid.

15. Use according to claim 13 or 14, wherein the DES hydrophilic compound is imidazole and the DES hydrophobic compound is hexanoic acid or octanoic acid, preferably present in a molar ratio between 1:1 and 1:3, wherein the DES hydrophobic compound is DL-menthol and the DES hydrophilic compound is acetic acid, preferably present in a molar ratio between 1:1 and 1:3, or wherein DES hydrophilic compound is tetrabutylammonium bromide and the DES hydrophobic compound is DL-menthol, preferably present in a molar ratio between 1:2 and 1:4.

Figure 1

Figure 2

Figure 3

A

B

Europäisches
Patentamt

European
Patent Office

Office européen
des brevets

# EUROPEAN SEARCH REPORT

Application Number

EP 20 16 2786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TOMÁS KŘÍZEK ET AL: "Menthol-based hydrophobic deep eutectic solvents: Towards greener and efficient extraction of phytocannabinoids", JOURNAL OF CLEANER PRODUCTION, vol. 193, 1 August 2018 (2018-08-01), pages 391-396, XP055731223, AMSTERDAM, NL ISSN: 0959-6526, DOI: 10.1016/j.jclepro.2018.05.080 | 1-3,7,8, 11,13-15 | INV. B01D11/02 |
| Y | * figures; tables * * section 2.4 * | 9,10 | |
| X | WANG LI-TAO ET AL: "Recyclable menthol-based deep eutectic solvent micellar system for extracting phytochemicals from Ginkgo biloba leaves", JOURNAL OF CLEANER PRODUCTION, ELSEVIER, AMSTERDAM, NL, vol. 244, 30 September 2019 (2019-09-30), XP085969732, ISSN: 0959-6526, DOI: 10.1016/J.JCLEPRO.2019.118648 [retrieved on 2019-09-30] | 1-3,7,8, 11,13-15 | |
| Y | * figures; tables * * section 2.3 * | 9,10 | |

TECHNICAL FIELDS
SEARCHED      (IPC)

B01D

-/--

~~The present search report has been drawn up for all claims~~

| Place of search | Date of completion of the search | Examiner |
|---|---|---|
| Munich | 16 September 2020 | Kleiminger, Lisa |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches Patentamt
European Patent Office
Office européen des brevets

**EUROPEAN SEARCH REPORT**

Application Number

EP 20 16 2786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YIFENG CAO ET AL: "Separation of Hydrophobic Compounds Differing in a Monounsaturated Double Bond Using Hydrophilic Ionic Liquid/Water Mixtures as Extractants", ACS SUSTAINABLE CHEMISTRY & ENGINEERING, vol. 6, no. 2, 19 January 2018 (2018-01-19), pages 2379-2385, XP055731364, US ISSN: 2168-0485, DOI: 10.1021/acssuschemeng.7b03827 * page 2383 * ----- | 9,10 | |

| | | | TECHNICAL FIELDS SEARCHED (IPC) |
|---|---|---|---|

~~The present search report has been drawn up for all claims~~

| Place of search | Date of completion of the search | Examiner |
|---|---|---|
| Munich | 16 September 2020 | Kleiminger, Lisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 7-11, 13-15(all partially)

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION**
**SHEET B**

Application Number

EP 20 16 2786

The Search Division considers that the present European patent application does not comply with the requirements of unity of invention and relates to several inventions or groups of inventions, namely:

1. claims: 1-3, 7-11, 13-15(all partially)

    hydrophilic compound is a hydrophilic acid (e.g. acetic acid) and hydrophobic compound is a hydrophobic base such as menthol

    ---

2. claims: 4(completely); 1-3, 8-11, 13-15(partially)

    hydrophilic compound is a short-chain quaternary ammonium salt (e.g. tetrabutylammonium bromide) and hydrophobic compound is a hydrophobic base such as menthol

    ---

3. claims: 5, 6, 12(completely); 1-3, 7-11, 13-15(partially)

    hydrophilic compound is a hydrophilic base and hydrophobic compound is a hydrophobic acid

    ---

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BLIGH ; DYER.** *Can J Biochem Physiol,* 1959, vol. 37, 911-917
- **BOCKISCH.** Fats and Oils Handbook. Elsevier, Hamburg, 1998
- **FOLCH et al.** *J Biol Chem,* 1957, vol. 22, 497-509
- **KÖSEOGLU ; ENGELGAU.** *JAOCS,* 1990, vol. 67, 239-249
- **CHUA ; SCHENK.** *Bioresour Technol,* 2017, vol. 244, 1416-1424
- **KUMAR et al.** *Algal Res,* 2017, vol. 21, 138-147
- **LU et al.** *Bioresour Technol,* 2016, vol. 218, 123-128
- **VENTURA et al.** *Chem Rev,* 2017, vol. 117, 6984-7052
- **SMITH et al.** *Chem Rev,* 2014, vol. 114, 11060-11082
- **ABBOTT et al.** *Chem Commun,* 2003, 70-71
- **ABBOTT et al.** *J Am Chem Soc,* 2004, vol. 126, 9142-9147
- **CHOI et al.** *Plant Physiol,* 2011, vol. 156, 1701-1705
- **FRANCISCO et al.** *Fluid Phase Equilib,* 2013, vol. 340, 77-84
- **MARTINS et al.** *ACS Sustain Chem Eng,* 2018, vol. 6, 8836-8846
- **SED et al.** *RSC Adv,* 2018, vol. 8, 37092-37097
- **FLORINDO et al.** *Fluid Phase Equilib,* 2017, vol. 448, 135-142
- **RIBEIRO et al.** *ACS Sustain Chem Eng,* 2015, vol. 3, 2469-2477
- **VAN OSCH et al.** *Green Chem,* 2015, vol. 17, 4518-4521
- **ABRAHAM et al.** *J Pharm Sci,* 2010, vol. 99, 1500-15
- **FLORINDO et al.** *Phys Chem Chem Phys,* 2017, vol. 20, 206-213
- **TELES et al.** *Fluid Phase Equilib,* 2017, vol. 448, 15-21
- **ANOUTI et al.** *J Colloid Interface Sci,* 2009, vol. 340, 104-111